# EUROPEAN PATENT SPECIFICATION

(11) **EP 1 727 330 B1**
(45) Date of publication and mention of the grant of the patent: **02.06.2010**
(21) Application number: 06113240.3
(22) Date of filing: 27.04.2006
(51) Int. Cl.: H04L 29/06

(54) **Wireless Communication Method and Apparatus**
Verfahren und Vorrichtung zur drahtlosen Kommunikation
Procédé et dispositif de communication sans fil

(30) Priority: 25.05.2005 JP 2005152017
(43) Date of publication of application: 29.11.2006
(73) Proprietor: Kyocera Corporation, Kyoto-shi Kyoto 612-8501 (JP)
(72) Inventor: Yokota, Tomoyoshi, c/o Kyocera Corporation,, Yokohama-shi,Kanagawa-ken (JP)
(74) Representative: Bruce, Alexander Richard Henry

(56) References cited:
- WO-A-02/27991
- WO-A-2006/047160
- US-A1- 2001 023 454
- US-A1- 2004 037 320
- SCHIEDER A ET AL: "Enhanced voice over IP support in GPRS and EGPRS" WIRELESS COMMUNICATIONS AND NETWORKING CONFERNCE, 2000. WCNC. 2000 IEEE 23-28 SEPTEMBER 2000, PISCATAWAY, NJ, USA,IEEE, vol. 2, 23 September 2000 (2000-09-23), pages 803-808, XP010532353 ISBN: 0-7803-6596-8
- LETTIERI P.; SRIVASTAVA M.B.: 'Adaptive frame length control for improving wireless link throughput, range, and energy efficiency' INFOCOM '98 vol. 2, 29 March 1998, NEW YORK, NY, USA,IEEE, US, pages 564 - 571, XP010270390

## Description

### BACKGROUND OF THE INVENTION

### Field of the Invention

The present invention relates to a wireless communication method and apparatus for improving efficiency of data communication through a wireless communication path.

### Description of the Related Art

VoIP (voice over Internet protocol) is a known protocol for sending and receiving voice data on an IP (Internet protocol) network. A technique disclosed in Reference Document 1 (Japanese Unexamined Patent Application, First Publication No. 2004-128603) may be applied to a wireless communication system in which not only RTP (real-time transport protocol) packets for VoIP but also packets for data communication (e.g., TCP (transmission control protocol) packets) are simultaneously processed. In the disclosed technique, received packets are classified into QoS (quality of service) packets having priority and the remaining general packets, and the QoS packets are stored. The stored QoS packets are capsuled, and sent as capsule packets. The capsule packets are transmitted in matching with a specific period of a CODEC (coder/decoder).

In this technique, only in "down" transmission from a base station are the RTP packets addressed to a plurality of users capsuled. In a WLAN (wireless local area network) system, the base station communicates with user terminals using common wireless frames. Therefore, when the RTP packets addressed to a plurality of users are capsuled in the down transmission, the frequency band assigned to the relevant wireless communication system can be efficiently used. However, in "up" transmission from the user terminals to the base station, no capsulation is performed; thus, the frequency band is not efficiently used. In addition, in the above technique, capsulation is applied to a plurality of the user terminals, and the technique cannot be applied to a system (e.g., a system employing a CDMA2000 1xEV-DO standard) in which the base station and each user terminal communicate with each other in one-to-one communication.

Generally, in a wireless communication system in which the base station and each user terminal communicate with each other by using wireless frames for one-to-one communication so as to realize high-speed data communication, the length of each communication packet is extremely large compared with that of the RTP packet for VoIP. However, in conventional communication, only one RTP packet having an extremely short length is imposed on a communication packet. Therefore, the frequency band assigned to the wireless communication system cannot be efficiently or effectively used; thus, useless delay may be caused, and the quality of VoIP may be degraded.

The above-described technique of capsuling the QoS packets is suitable for a system (e.g., a wireless LAN system) using communication packets which have a constant packet length. The above-mentioned CDMA2000 1xEV-DO standard is provided so as to obtain a specified cdma2000 1x standard suitable for data communication and improve the communication speed. In the "up" links and "down" links in accordance with the CDMA2000 1xEV-DO standard, adaptive modulation and demodulation are used for adaptively controlling a data modulation method and an encoding ratio in channel encoding in accordance with the state of wireless links, so that the packet length is also adaptively varied. It has been impossible to apply the above-described technique of capsuling the QoS packet (which has been applied to a system using communication packets having a constant packet length) to a system using adaptive modulation and demodulation, in which the length of the communication packets is variable. Therefore, the frequency band has not been efficiently used.

In addition, in the wireless communication system, the base station communicates with a plurality of user terminals via common wireless frames. Therefore, as disclosed in Reference Document 1, the frequency band can be efficiently used by capsuling the RTP packets to a plurality of user terminals in the down transmission. However, no capsuling is performed in the up transmission; thus, the frequency band cannot be efficiently used.

WO 02/27991 describes a method for optimizing system performance by adaptively determining the size of packets in a packet-based communication system.

### SUMMARY OF THE INVENTION

The invention is defined by the subject-matter of the independent claims.

### BRIEF DESCRIPTION OF THE DRAWINGS

Fig. 1 is a block diagram showing the structure of a user terminal as an embodiment in accordance with the present invention.
Fig. 2 is a diagram showing the general structure of a base station in the embodiment.
Fig. 3 is a diagram showing the general structure of a wireless communication system in the embodiment.
Fig. 4 is a flowchart showing a data receiving operation of the user terminal in the embodiment.
Fig. 5 is a flowchart showing a transmission operation of the user terminal in the embodiment.
Fig. 6 is a diagram showing the structure of an RTP packet.
Fig. 7 is also a diagram showing the structure of an RTP packet.

### DETAILED DESCRIPTION OF THE INVENTION

Hereinafter, preferable embodiments according to the present invention will be described with reference to the appended figures.

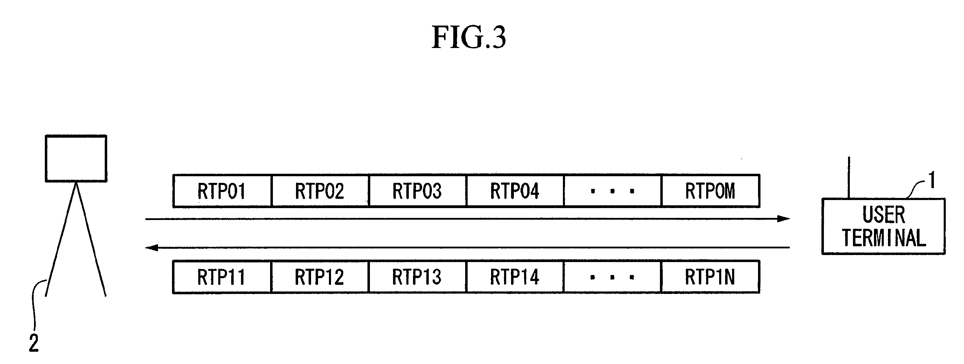

Fig. 3 is a diagram showing the structure of a wireless communication system in accordance with an embodiment of the present invention. In the wireless communication system of the present embodiment, adaptive modulation and demodulation are performed in up link and down link (i.e., up transmission and down transmission), and the data modulation method and the encoding ratio in channel encoding are adaptively controlled in accordance with the state of wireless links, so that the packet length (i.e., the number of bits) of a wireless frame is adaptively varied.
Here, a CDMA2000 1xEV-DO system will be explained as an example of the wireless communication system. In the present embodiment, a user terminal 1 and a base station 2 as wireless communication apparatuses communicate with each other using RTP packets for VoIP (i.e., packets for real-time communication). Actually, a plurality of user terminals 1 are present.

In Fig. 3, N RTP packets are inserted in a wireless frame (or coupled with the wireless frame) in the up link from the user terminal to the base station 2, and M RTP packets are inserted in a wireless frame (or coupled with the wireless frame) in the down link from the base station 2 to the user terminal 1. In the CDMA2000 1xEV-DO system, the up and the down links are asynchronous with each other; thus, the transmission rate and the number of bits (i.e., the number of transmitted packets) included in one wireless frame are also not common between the up link and the down link. Therefore, the number of inserted (or coupled) RTP packets is not common between the up and the down links.

In the adaptive modulation and demodulation of the present wireless communication system, an appropriate method of modulating transmitted data and an appropriate demodulation method corresponding thereto are selected in accordance with communication states. Typically, based on the state of communication with the user terminal 1, the base station 2 switches the method of modulating data to be transmitted to the user terminal 1. For example, when the communication state is preferable, a modulation method having a low error tolerance but having a high communication rate is selected, and in contrast, when the communication state is unpreferable, a modulation method having a low communication rate but having a high error tolerance is selected.

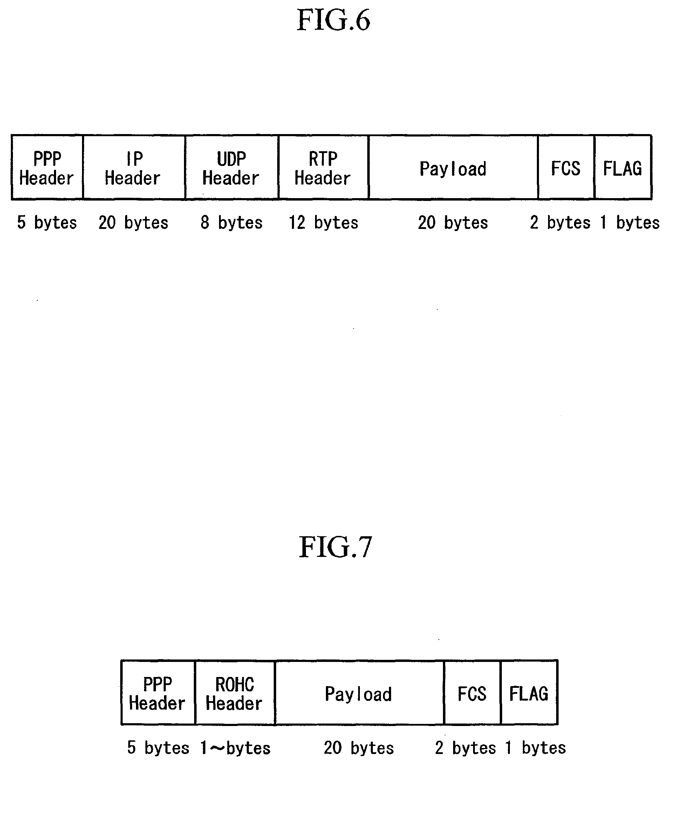

As described above, in the CDMA2000 1xEV-DO system, the up and the down links are asynchronous with each other; therefore, the transmission rate and the number of bits included in one wireless frame (i.e., the number of transmitted packets) are not common between the up and the down links, and thus the number of the RTP packets to be coupled is also not common between the up and the down links. In a WWAN (wireless wide area network), a voice coding method standardized in G.729 is generally used. In this case, the RTP packet for VoIP has a structure as shown in Fig. 6. As shown in Fig. 6, before "payload" as voice data, a PPP (point-to-point protocol) header, an IP (Internet protocol) header, a UDP (user datagram protocol) header, and an RTP header are provided. After "payload", "FCS" and "FLAG" for error correction are provided.

The length of the packet except for the PPP header is approximately 60 bytes, which is extreme small compared with the number of bits (i.e., the length of packets) included in one wireless frame (of approximately 26.666 ms) in the up or the down transmission of the CDMA2000 1xEV-DO system. Actually, in the down transmission, the maximum length of transmitted packets in a MAC (media access control) layer is 1002 bits; thus, two packets, each shown in Fig. 6, can be inserted in (or coupled with) a wireless frame. On the other hand, in the up transmission, the maximum length of transmitted packets (i.e., the maximum number of bits) in a MAC layer depends on the transmission rate, as shown below:

| Transmission rate (kbps) | Maximum number of bits |
|---|---|
| 9.6 | 232 |
| 19.2 | 488 |
| 38.4 | 1000 |
| 76.8 | 2024 |
| 153.6 | 4072 |

Therefore, when the transmission rate is 9.6 kbps or 19.2 kbps, a plurality of RTP packets cannot be inserted in (or coupled with) one wireless frame. However, when the transmission rate is 38.4 kbps or higher, the number of bits in one wireless frame varies and two to eight RTP packets can be inserted in (or coupled with) one wireless frame. Therefore, in the up and the down links, the wireless frequency band can be efficiently used so as to transmit the RTP packets, thereby improving the quality of VoIP.

As a header compression technique, ROHC (Robust header compression) is known, which is standardized in RFC3095. When ROHC is applied to the up transmission having a transmission rate of 19.2 kbps, the minimum length of the RTP packet except for the PPP header, FCS, and FLAG is 21 bytes (see Fig. 7). Therefore, in this case, two RTP packets can be inserted in (or coupled with) one wireless frame. In the CDMA2000 1xEV-DO system, the maximum packet length in the MAC layer in the down transmission is fixed to 1002 bits for any transmission rate; thus, it is unnecessary to adaptively vary the number of RTP packets (to be inserted) in the MAC layer in accordance with the wireless link state in the down transmission. However, in another system, it may be necessary to adaptively vary the number of RTP packets in the MAC layer in accordance with the wireless link state in the down transmission; thus, this necessity is also considered in the present embodiment.

The relationship between the transmission rate and the number of inserted (or coupled) packets has been described above. A specific relationship can also be defined between an encoding ratio of encoding (called "channel encoding") for correction of transmission errors in a transmission path and the number of inserted (or coupled) packets. Specifically, the encoding ratio is a ratio of the length of data bits to the length of encoded bits (the sum of the data bits and redundant bits). That is, when the encoding ratio is varied, the number of bits included in one wireless frame is also varied. However, in the present embodiment, an example relating to the transmission rate will be described.

The structure of the user terminal 1 will be explained. The user terminal 1 of the present embodiment is a wireless communication apparatus such as a mobile phone terminal, a data communication card, a PDA (personal digital assistance) having a wireless communication function, or a car navigation system. In the CDMA2000 1xEV-DO system, the transmission rate for the up transmission is commanded by the base station 2; thus, it is necessary to find and extract data indicating the commanded transmission rate from the packets received from the base station 2. In systems other than the CDMA2000 1xEV-DO system, the user terminal 1 may independently determine the transmission rate based on wireless link data (i.e., data for indicating communication characteristics such as a state of the transmission path or a state of data reception); thus, a function of collecting the wireless link data is required. The number of RTP packets to be inserted in (or coupled with) one wireless frame is or determined based on the transmission rate commanded from the base station 2 or a result of statistical processing applied to the wireless link data (which will be explained later). In addition, the number of RTP packets to be inserted in (or coupled with) one wireless frame may be determined based on the maximum transmission rate which can be employed in the present transmission.

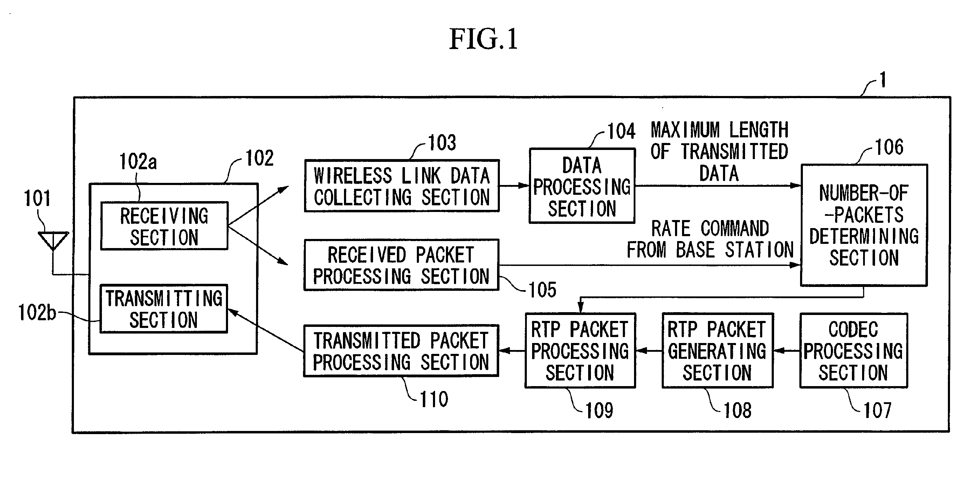

Fig. 1 is a block diagram showing the structure of the user terminal 1. Each section shown in Fig. 1 will be explained below.

An antenna 101 is provided for performing transmission and reception of electromagnetic waves to and from the base station 2.

An RF section 102 is a wireless device having a receiving section 102a for demodulating a received signal so as to convert the received signal to received packets, and a transmitting section 102b for converting packets to be transmitted to a transmitted signal (i.e., a signal to be transmitted) so as to generate a modulated transmitted signal.

A wireless link data collecting section 103 measures communication characteristics such as a state of a down transmission path from the base station 2 (as a party for communication) or a state of data reception (e.g., RSSI, CIR, or SIR), and generates wireless link data based on results of the measurement.

A data processing section 104 computes the maximum length of transmitted data by performing, for example, statistical processing of the wireless link data, and informs a number-of-packets determining section 106 of the computed maximum length.

A received packet processing section 105 subjects the received packets to decoding for ROHC, or the like. The received packet processing section 105 also extracts data of the transmission rate, commanded by the base station 2, from the received packets, and informs the number-of-packets determining section 106 of the data of the transmission rate.

Based on the present transmission rate, the maximum length of transmitted data which is communicated by the data processing section 104, or the transmission rate communicated by the received packet processing section 105, the number-of-packets determining section 106 determines the number of RTP packets to be inserted to (or coupled with) one wireless frame, and informs an RTP packet processing section 109 of the determined number of the RTP packets.

A CODEC processing section 107 performs compression (i.e., encoding) of voice data.

An RTP packet generating section 108 performs header processing (including encoding for ROHC) while the compressed voice data is defined as "payload" data, thereby generating RTP packets.

Based on the number of packets to be inserted (or coupled), communicated by the number-of-packets determining section 106, the RTP packet processing section 109 performs insertion (or coupling) of the RTP packets.

A transmitted packet (i.e., packet to be transmitted) processing section 110 has an RTP packet FIFO for temporarily storing the RTP packets, an additional packet FIFO for temporarily storing packets other than the RTP packets, and a transmission buffer for temporarily storing packets to be transmitted, which include the RTP packets. The transmitted packet processing section 110 performs QoS control with respect to the RTP packets and the other packets, or the like.

The user terminal 1 shown in Fig. 1 has both (i) a function of determining the number of the RTP packets to be inserted (or coupled) based on the maximum length of transmitted data, which is computed by itself, and (ii) a function of determining the number of the RTP packets to be inserted (or coupled) based on the transmission rate communicated by the base station 2. In order to determine the number of the RTP packets to be inserted (or coupled), the present transmission rate must be measured. Therefore, the wireless communication system should have a function which matches the system, for example, a function of determining the number of the RTP packets to be inserted (or coupled) based on the maximum transmission rate which is presently available in transmission.

Below, operations of the wireless link data collecting section 103 and the data processing section 104 will be explained. Typically, the wireless link data collecting section 103 measures the strength of a received signal output to the receiving section 102a, and generates the wireless link data which indicates a result of this measurement. The wireless link data collecting section 103 outputs the generated wireless link data to the data processing section 104. The data processing section 104 may compute an average of values of the strength of the received signal, which are indicated by a plurality of items of the wireless link data. The data processing section 104 has a table which indicates a relationship between the strength of the received signal and the maximum length of transmitted data, and uses this table so as to obtain the maximum length of transmitted data corresponding to the computed strength of the received data. The data processing section 104 informs the number-of-packets determining section 106 of the obtained maximum length of transmitted data.

However, a desired value of the maximum length of transmitted data in up transmission may not be obtained due to a cause or a factor of the wireless communication system. In this case, the maximum transmission rate, which is presently available in the system, is used instead (for example, the present value of the maximum transmission rate is used). In addition, when using the maximum transmission rate based on such a specific mechanism of the system, the above-described function of collecting the wireless link data may not be used, and a function dependent on the (present) maximum transmission rate in transmission may be used instead. Below, such a maximum transmission rate which is determined depending on the specific mechanism of the system will be called "the maximum transmission rate based on the system".

Next, the operation of the user terminal 1 will be explained. In general wireless communication, not only RTP packets for VoIP but also data packets such as TCP packets may be communicated between the user terminal 1 and the base station 2. In this case, the RTP packets and the other packets should be distinguished from each other based on headers, so as to classify the packets. The RTP packets for VoIP need real-time performance in comparison with the other packets; thus, QoS control is performed so as to give the RTP packets priority over other packets.

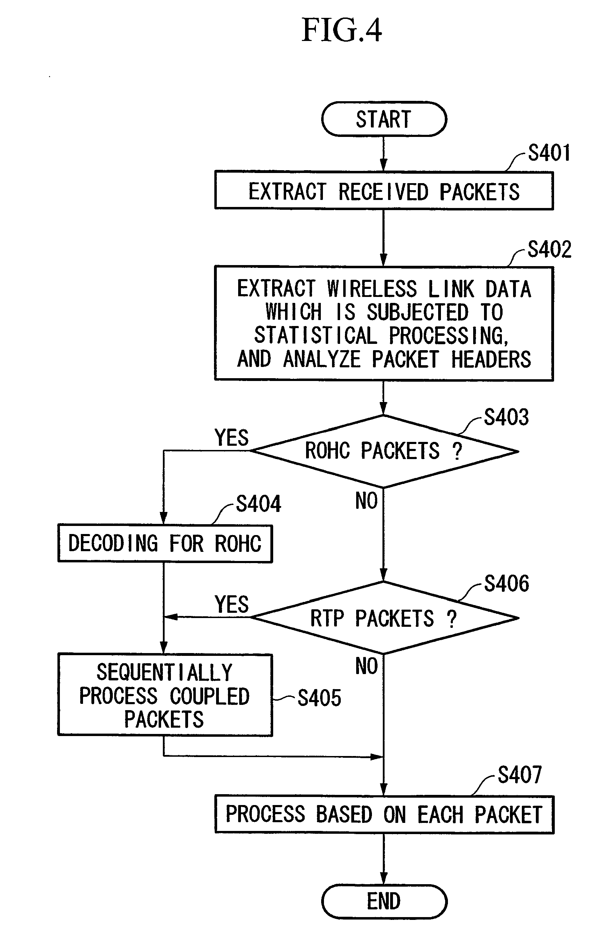

Fig. 4 is a flowchart showing a data receiving operation performed by the user terminal 1 in consideration of the above control. Electromagnetic waves transmitted by the base station 2 are received by the antenna 101, and are output as a received signal to the receiving section 102a. The receiving section 102a demodulates the received signal so as to convert the signal to received packets, and outputs the received packets to the received packet processing section 105 (see step S401).

The wireless link data collecting section 103 measures the strength of the received signal, and generates the wireless link data which is output to the data processing section 104. Based on the wireless link data, the data processing section 104 obtains the maximum transmission rate, and informs the number-of-packets determining section 106 of the obtained maximum transmission rate. In addition, the received packet processing section 105 analyzes the headers of the received packets, which are used in the next step (see step S402).

Based on the results of the above analysis of the packet headers, the received packet processing section 105 determines whether header compression using ROHC has been performed (see step S403).

Below, voice packets for VoIP, which do not have the header compressed by ROHC, will be simply called "RTP packets", and voice packets for VoIP, which have the header compressed by ROHC, will be called "ROHC packets". When the header compression has been performed (i.e., when the packets are the ROHC packets), the received packet processing section 105 decodes the received packets by ROHC, and expands the headers (see step S404). The received packet processing section 105 sequentially processes RTP packets in the received packets in order from the head thereof. More specifically, the received packet processing section 105 expands the payload of the RTP packets (i.e., a decoding process) in order from the head of the RTP packets (see step S405). In the next step S407, the received packet processing section 105 performs a process based on each packet.

On the other hand, when it is determined in step S403 that the header compression has not been performed (i.e., when the packets are other than the ROHC packets), the received packet processing section 105 determines whether the received packets are RTP packets (see step S406). When the received packets are the RTP packets, the received packet processing section 105 performs the process of step S405. In contrast, when the received packets are other than the RTP packets, the received packet processing section 105 performs the process of step S407.

In step S407, the received packet processing section 105 performs a process corresponding to each packet. More specifically, the received packet processing section 105 performs, for example, a process of extracting data of the transmission rate (commanded by the base station 2) from the packet and informing the number-of-packets determining section 106 of the extracted data, or a process of outputting the TCP packet or the like to the following processing sections. The number-of-packets determining section 106 determines the number of RTP packets to be inserted (or coupled), based on the maximum length of transmitted data (which may be the maximum transmission rate based on the system) or a commanded transmission rate. Accordingly, QoS control for giving priority to the RTP packets can be performed when the RTP packets for VoIP need real-time performance in comparison with other packets such as the TCP packets.

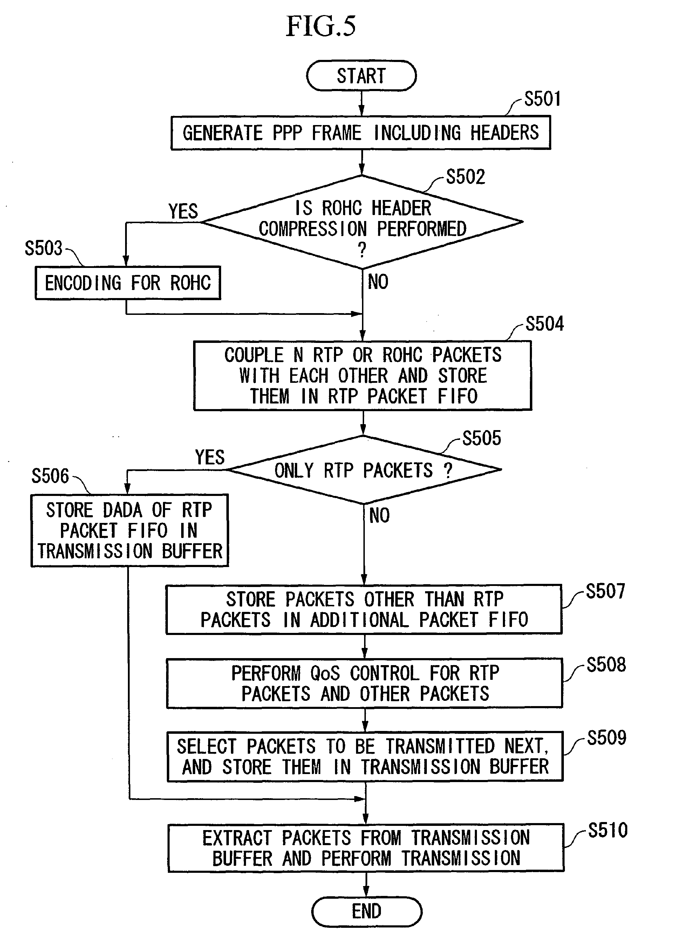

Fig. 5 is a flowchart showing a transmission operation performed by the user terminal 1 in consideration of the above control. When voice data based on VoIP is input into the CODEC processing section 107, the CODEC processing section 107 performs CODEC processing and outputs the processed voice data to the RTP packet generating section 108. The RTP packet generating section 108 adds headers (e.g., a PPP header) to the input voice data so as to generate an RTP packet (i.e., a PPP frame) (see step S501).

The following steps are selected depending on a condition of whether header compression using ROHC (i.e., ROHC header compression) is performed, or on the kind of data. When the ROHC header compression is performed (i.e., "YES" in step S502), the RTP packet generating section 108 performs encoding for ROHC (see step S503), and the process of step S504 is then performed. On the other hand, when the ROHC header compression is not performed (i.e., "NO" in step S502), the RTP packet generating section 108 performs the process of step S504.

In step S504, the RTP packet generating section 108 outputs (i) voice packets (simply called "RTP Packets") to which the ROHC header compression has not been applied, or (ii) voice packets (called "ROHC packets") to which the ROHC header compression has been applied, to the RTP packet processing section 109. The RTP packet processing section 109 performs a process for preparing insertion (or coupling) of a specific number (N) of the RTP or the ROHC packets, where N is communicated by the number-of-packets determining section 106. The RTP packet processing section 109 outputs the processed RTP or ROHC packets to the transmitted packet processing section 110. The transmitted packet processing section 110 stores the RTP or the ROHC packets (which were processed in preparation for the insertion (or coupling) by the RTP packet processing section 109) in the RTP packet FIFO (see step S504).

In the next step S505, the transmitted packet processing section 110 determines whether the packets stored in the RTP packet FIFO are only the RTP packets (which may include ROHC packets) (see step S505). When the packets stored in the RTP packet FIFO are only the RTP packets (which may include ROHC packets), the transmitted packet processing section 110 extracts the RTP packets (or the ROHC packets) from the RTP packet FIFO, and stores them in the transmission buffer (see step S506). The process of step S510 is then performed.

On the other hand, when other packets (e.g., TCP packets) other than the RTP packets (which may include ROHC packets) are stored in the RTP packet FIFO, the transmitted packet processing section 110 stores the other packets in the additional packet FIFO provided for the other packets (see step S507). The transmitted packet processing section 110 performs QoS control for the RTP packets and the other packets. That is, the RTP packets require real-time performance in comparison with the other packets; thus, control for transmitting the RTP packets prior to the other packets is performed (see step S508). In the next step S509, the transmitted packet processing section 110 selects packets to be transmitted next, and extracts the relevant packets from the RTP or the additional packet FIFO, and stores the extracted packets in the transmission buffer.

After the process of step S506 or S509, the transmitted packet processing section 110 extracts the packets from the transmission buffer, and outputs the extracted packets to the transmitting section 102b. The transmitting section 102b modulates the packets by converting the packets to a transmitted signal (i.e., a signal to be transmitted), and transmits the signal via the antenna 101 to the base station 2 (see step S510). Accordingly, QoS control for giving priority to the RTP packets for VoIP in comparison with the other packets (e.g., TCP packets) can be performed when the RTP packets require real-time performance in comparison with the other packets.

The structure of the base station 2 will be explained below. As described above, in the CDMA2000 1xEV-DO system, the maximum length of transmitted packets in the MAC layer is fixed to 1002 bits regardless of the transmission rate. Therefore, actually, 2 RTP packets are always inserted (or coupled). However, in another kind of wireless communication system, the maximum length of transmitted packets may be variable in accordance with the transmission rate. Therefore, in the present embodiment, the number of the RTP packets to be inserted (or coupled) is determined in accordance with the transmission rate assigned to each user (terminal).

In addition, the base station 2 employs a TDMA (time division multiple access) method as a multiplexing method in down transmission to the user terminal 1. In the TDMA method, a unit time (called a "(time-division) slot") of 1/600 seconds is used as a divided time period. In each unit time, the base station 2 communicates with only one appropriate user terminal 1, and such a target user terminal 1 is switched in accordance with time (i.e., scheduling is performed), so that the base station 2 communicates with a plurality of the user terminals 1.

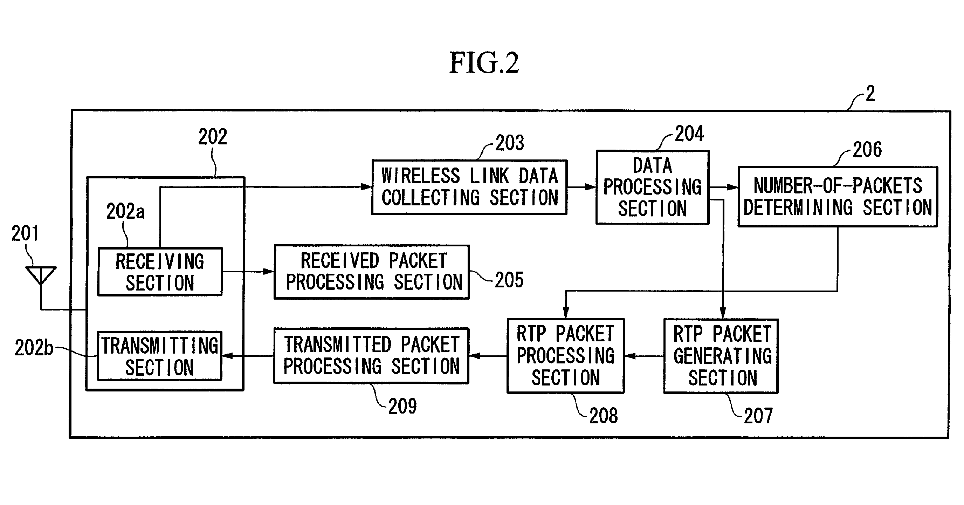

Fig. 2 is a block diagram showing the structure of the base station 2. Below, sections shown in Fig. 2 will be explained.

An antenna 201 is provided for performing transmission and reception of electromagnetic waves to and from the user terminal 1.

An RF section 202 is a wireless device having a receiving section 202a for demodulating a received signal so as to convert the received signal to received packets, and a transmitting section 202b for converting packets to be transmitted to a transmitted signal so as to obtain a modulated transmitted signal.

A wireless link data collecting section 203 measures communication characteristics such as a state of an up transmission path from the user terminal 1 (as a party for communication) or a state of data reception (e.g., RSSI, CIR, or SIR), and generates wireless link data based on results of the measurement.

A data processing section 204 computes the maximum length of transmitted data by performing statistical processing of the wireless link data, or the like, and informs a number-of-packets determining section 206 of the computed maximum length. The data processing section 204 also determines the transmission rate for down transmission to the user terminal 1 based on, for example, an average of values of the strength of the received signal, which are indicated by the wireless link data. The data processing section 204 informs an RTP packet generating section 207 of the determined transmission rate.

A received packet processing section 205 subjects the received packets to decoding for ROHC, or the like, and outputs the processed received packets to a processing circuit (not shown).

Based on the communicated maximum length of transmitted data, the number-of-packets determining section 206 determines the number of RTP packets to be inserted (or coupled), and informs an RTP packet processing section 208 of the determined number of the RTP packets.

The RTP packet generating section 207 performs header processing (including encoding for ROHC) while the voice data for each user (terminal), which is input from the processing circuit, is defined as "payload" data, thereby generating RTP packets for each user.

Based on the number of packets to be inserted (or coupled), communicated by the number-of-packets determining section 206, the RTP packet processing section 208 performs insertion (or coupling) of the RTP packets for each user.

Similarly to in the transmitted packet processing section 110 of the user terminal 1, a transmitted packet processing section 209 has an RTP packet FIFO for temporarily storing the RTP packets, an additional packet FIFO for temporarily storing packets other than the RTP packets, and a transmission buffer for temporarily storing packets to be transmitted. The transmitted packet processing section 209 performs QoS control between the RTP packets and the other packets, or the like.

The operation of the base station 2 is basically similar to that performed by the user terminal 1. However, the base station 2 communicates with a plurality of user terminals 1; thus, an additional process such as scheduling for communication with the plurality of user terminals 1 is necessary. However, regarding communication with a specific user terminal 1, the operation performed by the base station 2 is similar to that of the user terminal 1. In addition, similar to a function (of the base station 2) of designating the transmission rate, the user terminal 1 may designate the transmission rate to the base station 2.

In the present embodiment, with a given CODEC period t1 (e.g., a period of a process of encoding voice data based on the start point of this process) and a minimum period t2 necessary for the user terminal 1 to receive data (e.g., a period of data reception based on the end point of the data reception), the user terminal 1 transmits packets after the insertion (or coupling) process (i.e., packets in a physical layer) to the base station 2 with a period T which satisfies "t2 ≤ T ≤ t1" (e.g., a period of data transmission based on the start point of the data transmission). A similar process is performed when the base station 2 transmits packets after the insertion (or coupling) process (i.e., packets in a physical layer) to the user terminal 1.

In the present embodiment, "coupling" means that each of the user terminal 1 and the base station 2 simply couples RTP packets, instead of coupling RTP packets while providing common headers and coupling a plurality of payload data items. Such simple coupling is performed so as to improve compatibility with a header compression method such as ROHC standardized in RFC3095. The quality of VoIP in wireless communication can be considerably improved by combining the header compression and the coupling of the RTP packets.

The present embodiment has shown the method of determining the number of packets inserted in (or coupled with) one wireless frame based on communication characteristics (such as the strength of the received signal), the maximum transmission rate based on the system, or the commanded transmission rate. However, the number of the inserted (or coupled) packets may be determined based on an encoding ratio of channel encoding. In addition, the number of bits included in one wireless frame varies due to an applied modulation method; thus, the number of the inserted (or coupled) packets is be determined based on the applied modulation method. The above encoding ratio or the modulation method may be designated by the system, or determined by a device which inserts (or couples) the packets.

As described above, each of the user terminal 1 and the base station 2 of the present embodiment stores an appropriate number of RTP packets for VoIP, inserts the packets in one wireless frame (or couples the packets with one wireless frame), and transmits the packets in up or down one-to-one communication. In data reception, each of the user terminal 1 and the base station 2 knows that the RTP packets have been inserted (or coupled); thus, sequential decoding of each RTP packet from the head of the received packets is performed. Therefore, it is possible to efficiently perform communication in consideration of real-time performance and QoS control.

In addition, the wireless communication system in accordance with the present embodiment is preferably applied to a system which employs adaptive modulation and demodulation (e.g., CDMA 1xEV-DO). In the system employing adaptive modulation and demodulation, the data modulation method and the encoding ratio of channel encoding are adaptively controlled based on wireless communication characteristics; thus, the packet length (i.e., the number of bits) of one wireless frame is also adaptively varied. In accordance with the present embodiment, even in a system in which the packet length (i.e., the number of bits) of one wireless frame is adaptively controlled, an optimum number of inserted (or coupled) RTP packets is determined, so that communication can be efficiently performed.

In the present embodiment, priority control is performed, in which packets requiring real-time performance (e.g., RTP packets for VoIP) are given priority in comparison with the other packets. Accordingly, communication without voice interruption can be efficiently performed while satisfying required real-time performance.

While preferred embodiments of the invention have been described and illustrated above, it should be understood that these are exemplary of the invention and are not to be considered as limiting. Additions, omissions, substitutions, and other modifications can be made without departing from the scope of the present invention. Accordingly, the invention is not to be considered as being limited by the foregoing description, and is only limited by the scope of the appended claims.

## Claims

1. A wireless communication method comprising the steps of:
determining a number of packets for real-time communication to be inserted in a wireless frame, the number of bits of the wireless frame being adaptively varied;
inserting the packets for real-time communication in the wireless frame, wherein the number of the packets are determined by the determining step; and
transmitting the wireless frame;
wherein the determination of the number of packets for real-time communication is based on a modulation method to be applied to the wireless frame when the wireless frame is transmitted.

2. The wireless communication method in accordance with claim 1, wherein the step of determining the number of packets for real-time communication is also based on a transmission rate for transmitting the wireless frame.

3. The wireless communication method in accordance with claim 1, wherein the step of determining the number of packets for real-time communication is also based on an encoding ratio to be applied to the wireless frame when the wireless frame is transmitted

4. The wireless communication method in accordance with claim 1, wherein, in the step of inserting the packets, the packets which have had headers are inserted in the wireless frame.

5. The wireless communication method in accordance with claim 1, wherein the step of transmitting the wireless frame is performed ahead of transmission of a wireless frame including other kinds of packets.

6. A wireless communication apparatus comprising:
a number-of-packets determining section (106; 206) for determining a number of packets for real-time communication to be inserted in a wireless frame, the number of bits of the wireless frame being adaptively varied;
an inserting section (109; 208) for inserting the packets for real-time communication in the wireless frame, wherein the number of the packets are determined by the number-of-packets determining section; and
a transmitting section (102b; 202b) for transmitting the wireless frame;
wherein the number-of-packets determining section is arranged to determine the number of packets based on a modulation method applied to the wireless frame when the wireless frame is transmitted.

7. The wireless communication apparatus in accordance with claim 6, wherein the number-of-packets determining section is arranged to determine the number of packets based on a transmission rate for transmitting the wireless frame.

8. The wireless communication apparatus in accordance with claim 6, wherein the number-of-packets determining section is arranged to determine the number of packets based on an encoding ratio to be applied to the wireless frame when the wireless frame is transmitted.

9. The wireless communication apparatus in accordance with claim 6, wherein the inserting section is arranged to insert the packets which have had headers in the wireless frame.

10. The wireless communication apparatus in accordance with claim 6, wherein the transmitting section is arranged to transmit the wireless frame ahead of transmission of a wireless frame including other kinds of packets.

## Patentansprüche

1. Verfahren für drahtlose Kommunikation, die folgenden Schritte umfassend:
Bestimmen einer Zahl von Paketen für Echtzeitkommunikation, die in einen drahtlosen Rahmen einzufügen sind, wobei die Zahl von Bits des drahtlosen Rahmens adaptiv variiert wird;
Einfügen der Pakete für Echtzeitkommunikation in den drahtlosen Rahmen, wobei die Zahl der Pakete durch den Bestimmungsschritt bestimmt wird; und
Übertragen des drahtlosen Rahmens;
wobei die Bestimmung der Zahl von Paketen für Echtzeitkommunikation auf einem Modulationsverfahren basiert, das auf den drahtlosen Rahmen anzuwenden ist, wenn der drahtlose Rahmen übertragen wird.

2. Verfahren für drahtlose Kommunikation nach Anspruch 1, wobei der Schritt des Bestimmens der Zahl von Paketen für Echtzeitkommunikation außerdem auf einer Übertragungsrate zum Übertragen des drahtlosen Rahmens basiert.

3. Verfahren für drahtlose Kommunikation nach Anspruch 1, wobei der Schritt des Bestimmens der Zahl von Paketen für Echtzeitkommunikation außerdem auf einem Codierungsverhältnis basiert, das auf den drahtlosen Rahmen anzuwenden ist, wenn der drahtlose Rahmen übertragen wird.

4. Verfahren für drahtlose Kommunikation nach Anspruch 1, wobei in dem Schritt des Einfügens von Paketen die Pakete, die Einleitungsfolgen hatten, in den drahtlosen Rahmen eingefügt werden.

5. Verfahren für drahtlose Kommunikation nach Anspruch 1, wobei der Schritt des Übertragens des drahtlosen Rahmens vor der Übertragung eines drahtlosen Rahmens, der andere Arten von Paketen enthält, durchgeführt wird.

6. Vorrichtung für drahtlose Kommunikation, umfassend:
einen Paketzahl-Bestimmungsabschnitt (106; 206) zum Bestimmen einer Zahl von Paketen für Echtzeitkommunikation, die in einen drahtlosen Rahmen einzufügen sind, wobei die Zahl von Bits des drahtlosen Rahmens adaptiv variiert wird;
einen Einfügungsabschnitt (109; 208) zum Einfügen der Pakete für Echtzeitkommunikation in den drahtlosen Rahmen, wobei die Zahl der Pakete durch den Paketzahl-Bestimmungsabschnitt bestimmt wird; und
einen Übertragungsabschnitt (102b; 202b) zum Übertragen des drahtlosen Rahmens;
wobei der Paketzahl-Bestimmungsabschnitt angeordnet ist, um die Zahl von Paketen basierend auf einem Modulationsverfahren zu bestimmen, das auf den drahtlosen Rahmen angewendet wird, wenn der drahtlose Rahmen übertragen wird.

7. Vorrichtung für drahtlose Kommunikation nach Anspruch 6, wobei der Paketzahl-Bestimmungsabschnitt angeordnet ist, um die Zahl von Paketen basierend auf einer Übertragungsrate zum Übertragen des drahtlosen Rahmens zu bestimmen.

8. Vorrichtung für drahtlose Kommunikation nach Anspruch 6, wobei der Paketzahl-Bestimmungsabschnitt angeordnet ist, um die Zahl von Paketen basierend auf einem Codierungsverhältnis zu bestimmen, das auf den drahtlosen Rahmen anzuwenden ist, wenn der drahtlose Rahmen übertragen wird.

9. Vorrichtung für drahtlose Kommunikation nach Anspruch 6, wobei der Einfügungsabschnitt angeordnet ist, um die Pakete, die Einleitungsfolgen hatten, in den drahtlosen Rahmen einzufügen.

10. Vorrichtung für drahtlose Kommunikation nach Anspruch 6, wobei der Übertragungsabschnitt angeordnet ist, um den drahtlosen Rahmen vor der Übertragung eines drahtlosen Rahmens, der andere Arten von Paketen enthält, zu übertragen.

## Revendications

1. Procédé de communication sans fil comprenant les étapes consistant à :
déterminer un nombre de paquets pour une communication en temps réel destiné à être inséré dans une trame sans fil, le nombre de bits de la trame sans fil étant varié de façon adaptative ;
insérer les paquets pour une communication en temps réel dans la trame sans fil, cas dans lequel le nombre de paquets est déterminé par l'étape de détermination ; et
transmettre la trame sans fil ;
cas dans lequel la détermination du nombre de paquets pour une communication en temps réel est fondée sur une méthode de modulation destinée à être appliquée à la trame sans fil au moment où la trame sans fil est transmise.

2. Procédé de communication sans fil selon la revendication 1, l'étape de détermination du nombre de paquets pour une communication en temps réel étant également fondée sur un débit de transmission pour transmettre la trame sans fil.

3. Procédé de communication sans fil selon la revendication 1, l'étape de détermination du nombre de paquets pour une communication en temps réel étant également fondée sur un rapport de codage destiné à être appliqué à la trame sans fil au moment où la trame sans fil est transmise.

4. Procédé de communication sans fil selon la revendication 1, les paquets qui avaient des en-têtes étant insérés dans la trame sans fil, lors de l'étape d'insertion des paquets.

5. Procédé de communication sans fil selon la revendication 1, l'étape de transmission de la trame sans fil étant exécutée avant la transmission d'une trame sans fil englobant d'autres types de paquets.

6. Appareil de communication sans fil, comprenant :
une section de détermination (106 ; 206) du nombre de paquets pour déterminer un nombre de paquets pour une communication en temps réel destiné à être inséré dans une trame sans fil, le nombre de bits de la trame sans fil étant varié de façon adaptative ;
une section d'insertion (109 ; 208) pour insérer les paquets pour une communication en temps réel dans la trame sans fil, cas dans lequel le nombre de paquets est déterminé par la section de détermination du nombre de paquets ; et
une section de transmission (102b ; 202b) pour transmettre la trame sans fil ;
cas dans lequel la section de détermination du nombre de paquets est agencée de manière à déterminer le nombre de paquets sur la base d'une méthode de modulation appliquée à la trame sans fil au moment où la trame sans fil est transmise.

7. Appareil de communication sans fil selon la revendication 6, la section de détermination du nombre de paquets étant agencée de manière à déterminer le nombre de paquets sur la base d'un débit de transmission pour transmettre la trame sans fil.

8. Appareil de communication sans fil selon la revendication 6, la section de détermination du nombre de paquets étant agencée de manière à déterminer le nombre de paquets sur la base d'un rapport de codage destiné à être appliqué à la trame sans fil au moment où la trame sans fil est transmise.

9. Appareil de communication sans fil selon la revendication 6, la section d'insertion étant agencée de manière à insérer dans la trame sans fil les paquets qui avaient des en-têtes.

10. Appareil de communication sans fil selon la revendication 6, la section de transmission étant agencée de manière à transmettre la trame sans fil avant la transmission d'une trame sans fil englobant d'autres types de paquets.
